# EUROPEAN PATENT APPLICATION

(11) **EP 4 336 775 A1**
(43) Date of publication of application: **13.03.2024**
(21) Application number: 22798875.5
(22) Date of filing: 12.04.2022
(51) Int. Cl.: H04L 9/08

(54) **INFORMATION PROCESSING METHOD, DEVICE, AND PROGRAM**

(30) Priority: 07.05.2021 JP 2021079362
(71) Applicant: Panasonic Intellectual Property Management Co., Ltd., Kadoma-shi, Osaka 571-0057 (JP)
(72) Inventor: YAMAMOTO, Masaya, Kadoma-shi, Osaka 571-0057 (JP); OKUNO, Koji, Kadoma-shi, Osaka 571-0057 (JP); MAEDA, Manabu, Kadoma-shi, Osaka 571-0057 (JP); UNAGAMI, Yuji, Kadoma-shi, Osaka 571-0057 (JP)
(74) Representative: Novagraaf International SA
(86) International application number: PCT/JP2022/017646
(87) International publication number: WO 2022/234768

(57) **Abstract**

The information processing method according to the present disclosure is for a device, and allows for sharing, between a home-appliance main microcontroller (13) and a communication module (11), a shared key that is an encryption key of a common-key cryptosystem for protecting a communication path (12) between the home-appliance main microcontroller (13) and the communication module (11). The information processing method includes: holding, by the home-appliance main microcontroller (13), a first shared key; detecting, by the communication module (11), a mismatch between a first message authentication code added to encrypted data obtained from the home-appliance main microcontroller (13) through the communication path and a second message authentication code calculated from the encrypted data; and when the mismatch is detected in the detecting, sharing the first shared key between the home-appliance main microcontroller (13) and the communication module (11) by the communication module (11) obtaining the first shared key from the home-appliance main microcontroller (13).

## Description

### [Technical Field]

The present disclosure relates to an information processing method, a device, and a program.

### [Background Art]

For example, in Patent Literature (PTL) 1, a drive device in a Blu-ray reproduction device encrypts, using a bus key, data such as contents obtained from an information recording medium, and transmits, through a connection bus, the encrypted data to a reproduction processing device such as a host (PC) that is another device, to reproduce the data. In this manner, even if the connection bus is sniffed, the data cannot be decrypted since the data is encrypted. Accordingly, it is possible to eliminate abuse of the data.

### [Citation List]

### [Patent Literature]

[PTL 1] Japanese Unexamined Patent Application Publication No. 2005-228432

### [Summary of Invention]

### [Technical Problem]

In general, Internet of Things (IoT) home appliances, i.e., major appliances such as refrigerators, washing machines, or microwaves including communication modules, include the communication modules as hardware modules different from microcontrollers for controlling functions (main functions) of the major appliances. This is because conventional major appliances are driven by microcontrollers alone without network connection and the communication modules are configured to be additionally provided to such conventional major appliances. For this reason, in each of the IoT home appliances, an internal bus (a communication path) for connecting a communication module and a microcontroller is provided.

Referring to PTL 1 here, protection for the internal bus is achievable when the communication module in the IoT home appliance transmits and receives data to and from the microcontroller. However, unlike high-performance personal computers or microcontrollers for audiovisual devices, microcontrollers for low-performance major appliances have difficulties in sharing a shared key.

In view of this, the present disclosure is conceived, and an object of the present disclosure is to provide an information processing method, a device, and a program that allow for sharing a shared key that is an encryption key of a common-key cryptosystem for protecting a communication path in the device.

### [Solution to Problem]

An information processing method or the like according to one aspect of the present disclosure is an information processing method that is for a device and allows for sharing a shared key between a first microcontroller used to control the device and a second microcontroller used to communicate with outside which are each included in the device as different hardware modules. The shared key is an encryption key of a common-key cryptosystem for protecting a communication path between the first microcontroller and the second microcontroller. The information processing method includes: holding, by the first microcontroller, a first shared key that is one of encryption keys of the common-key cryptosystem; detecting, by the second microcontroller, a mismatch between a first message authentication code added to encrypted data obtained from the first microcontroller through the communication path and a second message authentication code calculated from the encrypted data; and when the mismatch is detected by the second microcontroller in the detecting, sharing the first shared key between the first microcontroller and the second microcontroller by the second microcontroller obtaining the first shared key from the first microcontroller.

The specific aspects of some of these may be implemented using a system, a method, an integrated circuit, a computer program, or a computer-readable recording medium such as CD-ROM, or any combination of systems, methods, integrated circuits, computer programs, and recording media.

### [Advantageous Effects of Invention]

According to the present disclosure, it is possible to achieve an information processing method, a device, and a program that allow for sharing an encryption key of a common-key cryptosystem for protecting a communication path in the device.

### [Brief Description of Drawings]

[FIG. 1]

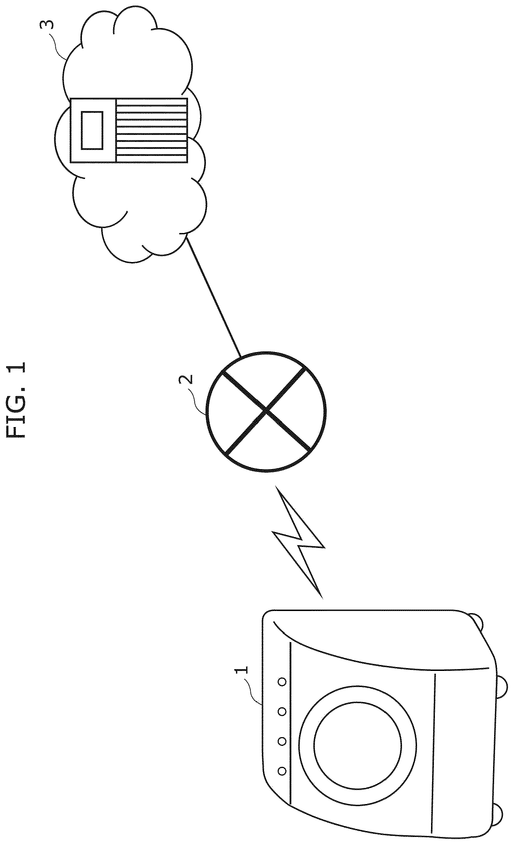

   FIG. 1 is a diagram conceptually illustrating an IoT home appliance according to an embodiment.
[FIG. 2]

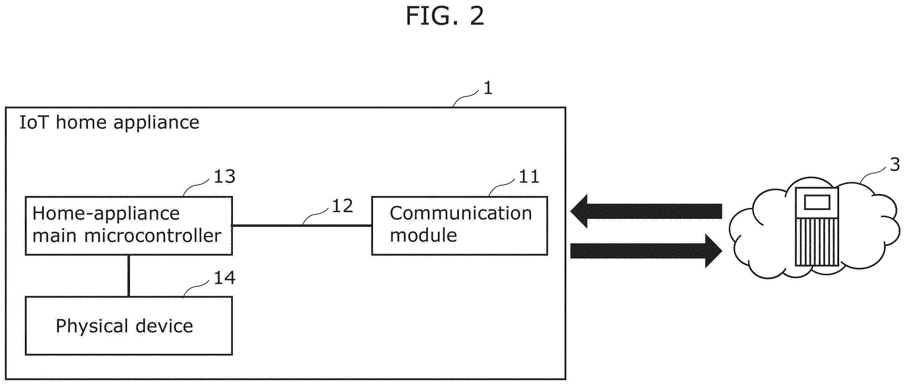

   FIG. 2 is a diagram illustrating the configuration of the IoT home appliance shown in FIG. 1.
[FIG. 3]

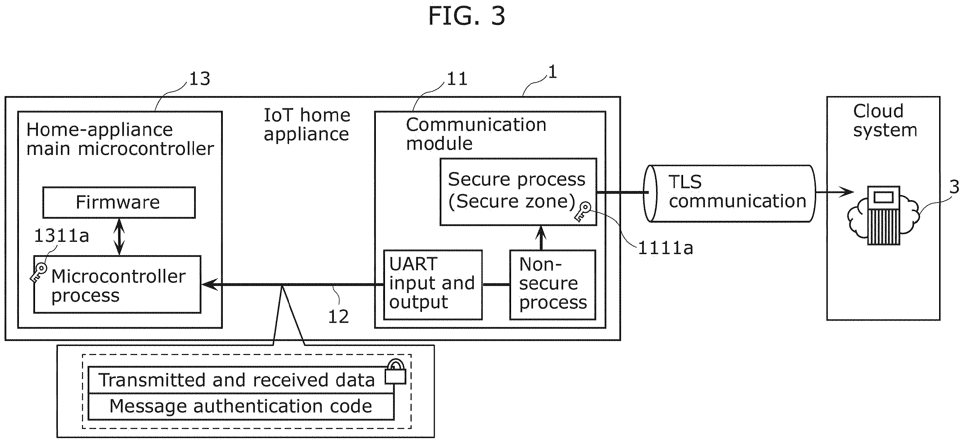

   FIG. 3 is a diagram for illustrating the function of the IoT home appliance shown in FIG. 2.
[FIG. 4]

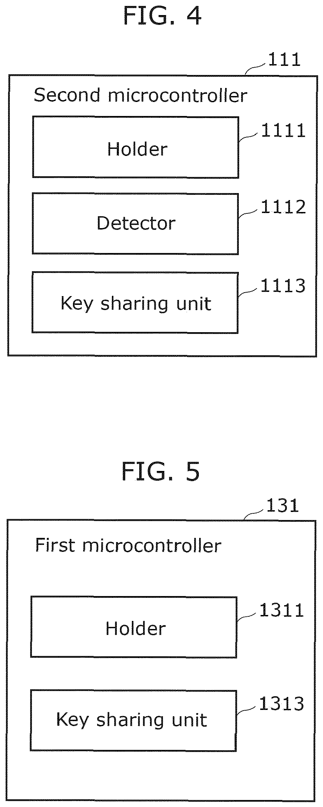

   FIG. 4 is a diagram illustrating an example of the functional configuration of the second microcontroller included in a communication module according to the embodiment.
[FIG. 5]
   FIG. 5 is a diagram illustrating an example of the functional configuration of the first microcontroller according to the embodiment.
[FIG. 6]

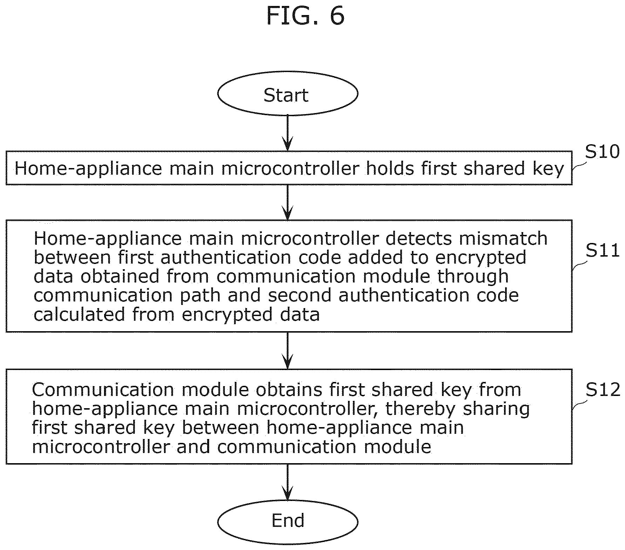

   FIG. 6 is a flowchart illustrating an operation process of the IoT home appliance according to the embodiment.
[FIG. 7]

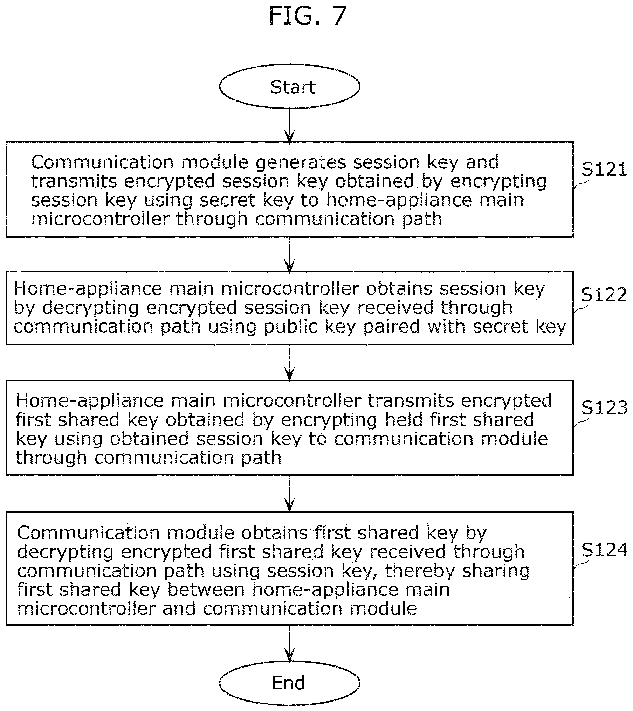

   FIG. 7 is a flowchart illustrating an example of the details of Step S12 shown in FIG. 6.
[FIG. 8]

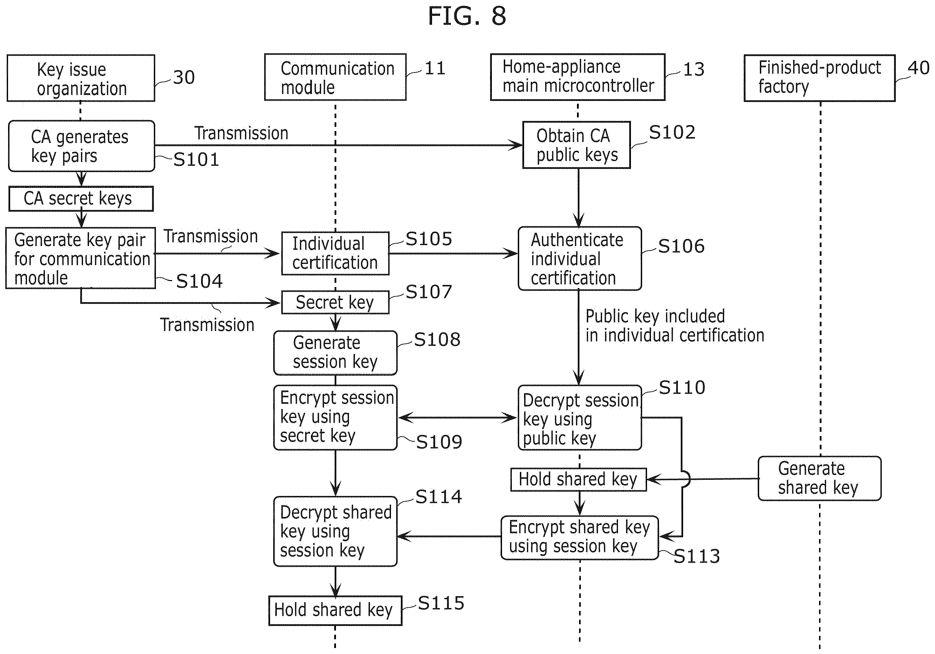

   FIG. 8 is a diagram illustrating an example of an operation sequence until a shared key is securely shared between the communication module and a home-appliance main microcontroller according to the embodiment.

### [Description of Embodiment]

### (Circumstances Leading to the Present Disclosure)

In recent years, the IoT technology has been developed to connect an "object" itself to the Internet, and an attempt to more conveniently utilize the object has been made.

Meanwhile, an IoT device, i.e., a device connected to the Internet as an object, has a possibility of receiving an attack causing malfunction of the device (object) through the Internet, or a possibility of sniffing of information regarding the device, such as usage history, through the Internet.

For this reason, in transmitting data to a cloud server or the like through the Internet or in receiving information for controlling the IoT device from a cloud server or the like, the IoT device keeps data secret by encrypting the data using Transport Layer Security (TLS) or the like, and if necessary, further adds a message authentication code to place the data into a state in which data tampering is detectable, before transmitting the data.

In general, however, the IoT home appliances, i.e., major appliances such as refrigerators, washing machines, or microwaves including communication modules, include the communication modules as hardware modules different from microcontrollers for controlling functions (main functions) of the major appliances. For this reason, in each of the IoT home appliances, an internal bus (a communication path) for connecting a communication module and a microcontroller is provided. In general, a serial interface such as Universal Asynchronous Receiver Transmitter (UART) or Serial Peripheral Interface (SPI) is used as the internal bus of a major appliance. Now, this internal bus (the communication path) is provided in the IoT home appliance, and thus the communication module transmits clear text data to the microcontroller via the internal bus. For this reason, in the IoT home appliance, data tampering or data sniffing on the internal bus may occur by an attack on the internal bus provided in the appliance using a probe terminal or the like.

More specifically, for example, when a firmware is transmitted to a microcontroller (a home-appliance microcontroller) after the communication module downloads the firmware from a server on a cloud side, the firmware may be tampered on the internal bus while being transmitted from the communication module to the microcontroller. Furthermore, the tampered firmware may cause the microcontroller to malfunction. Moreover, for example, when the communication module receives an operation instruction for the microcontroller through the Internet, the operation instruction may be tampered, fraudulently deleted, or fraudulently changed on the internal bus while being transmitted from the communication module to the microcontroller. Furthermore, the operation instruction that has been tampered or the like may cause the microcontroller to operate differently from the operation expected by a user through the operation instruction. Moreover, for example, when the microcontroller collects and transmits data such as sensor information to the communication module to upload the data to an external cloud or the like, data sniffing may occur on the internal bus while the microcontroller transmits the data to the communication module.

Accordingly, in order to protect the internal bus connecting the communication module and the microcontroller against the sniffing, the communication module and the microcontroller need to use encrypted data for data transmission and reception. Moreover, in order to protect the internal bus against the tampering, it is also necessary to implement a function that detects the tampering by adding the message authentication code.

Moreover, for example, in major appliances such as refrigerators, washing machines, or microwaves, a 16-bit microcontroller, a 32-bit microcontroller, or the like is employed as the microcontroller for controlling the main function. In other words, the major appliance is limited in the processing performance of the microcontroller for controlling the main function. For this reason, it is not realistic that an encryption key of a public-key cryptosystem, which is heavy, is employed to such a microcontroller, and thus it is necessary to employ an encryption key (a shared key) of a common-key cryptosystem such as Advanced Encryption Standard (AES), which is light. Moreover, when the shared key of the common-key cryptosystem is employed, the shared key has to be held by the communication module and the microcontroller.

However, in case of a failure of a major appliance such as a refrigerator, a washing machine, or a microwave, the failure is typically handled by making replacement for each part including the communication module or the microcontroller. When such handling is done, the shared key held by the common module does not match the shared key held by the microcontroller, and thus this creates a problem of preventing data from being transmitted and received between the communication module and the microcontroller.

An information processing method according to one aspect of the present disclosure is an information processing method that is for a device and allows for sharing a shared key between a first microcontroller used to control the device and a second microcontroller used to communicate with outside which are each included in the device as different hardware modules. The shared key is an encryption key of a common-key cryptosystem for protecting a communication path between the first microcontroller and the second microcontroller. The information processing method includes: holding, by the first microcontroller, a first shared key that is one of encryption keys of the common-key cryptosystem; detecting, by the second microcontroller, a mismatch between a first message authentication code added to encrypted data obtained from the first microcontroller through the communication path and a second message authentication code calculated from the encrypted data; and when the mismatch is detected by the second microcontroller in the detecting, sharing the first shared key between the first microcontroller and the second microcontroller by the second microcontroller obtaining the first shared key from the first microcontroller.

In this manner, when the shared key held by the first microcontroller does not match the shared key held by the second microcontroller, the second microcontroller is allowed to hold the shared key held by the first microcontroller. Accordingly, it is possible to allow for sharing the encryption key of the common-key cryptosystem for protecting the communication path in the device.

Here, for example, the sharing may include: when the mismatch is detected by the second microcontroller in the detecting, generating, by the second microcontroller, a session key, and transmitting, by the second microcontroller, an encrypted session key obtained by encrypting the session key using a secret key of a public-key cryptosystem to the first microcontroller through the communication path; obtaining, by the first microcontroller, the session key by decrypting the encrypted session key received through the communication path using a public key paired with the secret key; transmitting, by the first microcontroller, an encrypted first shared key obtained by encrypting the held first shared key using the obtained session key to the second microcontroller through the communication path; and obtaining, by the second microcontroller, the first shared key by decrypting the encrypted first shared key received through the communication path using the session key, to share the first shared key between the first microcontroller and the second microcontroller.

In this manner, when the shared key held by the first microcontroller does not match the shared key held by the second microcontroller, it is possible to use a public-key cryptosystem and a key exchange system to allow the second microcontroller to hold the shared key held by the first microcontroller.

Moreover, for example, the sharing may include: when the mismatch is detected a predetermined number of times by the second microcontroller in the detecting, obtaining, by the second microcontroller, the first shared key from the first microcontroller.

Moreover, for example, the sharing may further include: when no encryption key of the common-key cryptosystem is held by the second microcontroller, obtaining, by the second microcontroller, the first shared key from the first microcontroller to share the first shared key between the first microcontroller and the second microcontroller.

Moreover, for example, the sharing may include: when no encryption key of the common-key cryptosystem is held by the second microcontroller, generating, by the second microcontroller, a session key, and transmitting, by the second microcontroller, an encrypted session key obtained by encrypting the session key using a secret key of a public-key cryptosystem to the first microcontroller through the communication path; obtaining, by the first microcontroller, the session key by decrypting the encrypted session key received through the communication path using a public key paired with the secret key; transmitting, by the first microcontroller, an encrypted first shared key obtained by encrypting the held first shared key using the obtained session key to the second microcontroller through the communication path; and obtaining, by the second microcontroller, the first shared key by decrypting the encrypted first shared key received through the communication path using the session key, to share the first shared key between the first microcontroller and the second microcontroller.

Moreover, for example, the holding may be performed in manufacturing the first microcontroller.

Moreover, a device according to one aspect of the present disclosure includes: a first microcontroller included in the device and used to control the device; a second microcontroller included in the device as a hardware module different from the first microcontroller and used to communicate with outside; and a communication path between the first microcontroller and the second microcontroller, wherein the first microcontroller includes: a holder that holds a first shared key which is one of encryption keys of a common-key cryptosystem for protecting the communication path, and the second microcontroller includes: a detector that detects a mismatch between a first message authentication code added to encrypted data obtained from the first microcontroller through the communication path and a second message authentication code calculated from the encrypted data; and a key sharing unit that allows the first shared key to be shared between the first microcontroller and the second microcontroller by obtaining the first shared key from the first microcontroller when the mismatch is detected by the second microcontroller.

With this configuration, when the shared key held by the first microcontroller does not match the shared key held by the second microcontroller, the second microcontroller is allowed to hold the shared key held by the first microcontroller. Accordingly, it is possible to allow for sharing the encryption key of the common-key cryptosystem for protecting the communication path in the device.

It is to be noted that the specific aspects of some of these may be implemented using a system, a method, an integrated circuit, a computer program, or a computer-readable recording medium such as CD-ROM, or any combination of systems, methods, integrated circuits, computer programs, and recording media.

A video display device or the like according to one aspect of the present disclosure is described in details below with reference to drawings. It is to be noted that the embodiment described below shows a general or specific example. Numerical values, shapes, materials, structural components, the arrangement of the structural components, and the like shown in the following embodiment are examples, and are not intended to limit the present disclosure. Among the structural components in the following embodiment, structural components which are not recited in the independent claims are described as optional structural components. It is also to be noted that the descriptions in the following embodiment, variations, etc. may be combined.

### [Embod iment]

### (1) Outline

FIG. 1 is a diagram illustrating the configuration of IoT home appliance 1 according to an embodiment.

As shown in FIG. 1, IoT home appliance 1 can communicate with cloud system 3 including servers through Internet 2.

Internet 2 is an example of a network, and a phone line or a local area network (LAN) is possible.

IoT home appliance 1 is a major appliance such as a washing machine as shown in FIG. 1 that is connected to Internet 2. It is to be noted that IoT home appliance 1 is not limited to the major appliance such as a washing machine that is connected to Internet 2. Another major appliance such as a refrigerator or a microwave as described above that is connected to Internet 2 is possible.

### (2) Configuration

Next, the configuration of IoT home appliance 1 is described.

FIG. 2 is a diagram illustrating the configuration of IoT home appliance 1 shown in FIG. 1. FIG. 3 is a diagram for illustrating the function of IoT home appliance 1 shown in FIG. 2.

As shown in FIG. 2, IoT home appliance 1 includes communication module 11, communication path 12, home-appliance main microcontroller 13, and physical device 14.

### [Communication path 12]

Communication path 12 is a communication path between communication module 11 and home-appliance main microcontroller 13, and is provided in IoT home appliance 1. Communication path 12 serially connects communication module 11 and home-appliance main microcontroller 13. It is to be noted that communication path 12 may be referred to as an internal bus between communication module 11 and home-appliance main microcontroller 13, or an interface between communication module 11 and home-appliance main microcontroller 13.

### [Communication module 11]

Communication module 11 is a downsized built-in communication terminal for connecting to Internet 2, and includes, for example, a communication function and a microcontroller (second microcontroller 111). More specifically, communication module 11 is included in IoT home appliance 1 as a hardware module different from home-appliance main microcontroller 13, and is used for a communication with the outside. In general, home-appliance main microcontroller 13 is located near physical device 14 that implements an essential function of the home appliance, e.g., in the case of a washing machine, a pulsator or a drive motor. In contrast, communication module 11 is located near a position suitable for reception of radio waves for wireless communication, e.g., in the case of a washing machine, a control panel.

In communicating with cloud system 3 through Internet 2, communication module 11 communicates using data encrypted using the TLS. Moreover, communication module 11 holds a shared key which is an encryption key of the common-key cryptosystem for protecting communication path 12. In data transmission to and reception from home-appliance main microcontroller 13 through communication path 12, communication module 11 uses data encrypted using the shared key for the data transmission and reception. It is to be noted that communication module 11 holds the shared key set to all-zero in manufacturing or replacing. This can be also expressed as communication module 11 holding no shared key. Moreover, this shared key is set to a random value for each device, and the random value can be statistically regarded as a unique value when the bit length of the shared key is sufficiently long.

Here, as shown in FIG. 3, communication module 11 includes functions of a secure process, a non-secure process, and an UART input and output.

### <Secure process>

Communication module 11 performs a secure process in a secure zone which is a region under a monitoring mode. In other words, communication module 11 performs the secure process in the secure zone which is in an environment different from that of a non-secure process. Access from a program code in a region outside the monitoring mode to a memory region or a program code in the secure zone is restricted. In this manner, even if the non-secure process has a vulnerability such as a buffer flow, communication module 11 can perform the secure process in the secure zone without being affected by the vulnerability.

In the present embodiment, communication module 11 holds, in the secure zone, shared key 1111a which is an encryption key of a common-key cryptosystem for protecting communication path 12. In communication module 11, the TLS is used to protect the communication path to cloud system 3 as described above, and thus it is possible to protect the communication path between cloud system 3 and the secure processing unit against data sniffing or data tampering.

### <Non-secure process>

Communication module 11 performs a non-secure process in a region that is not the secure zone. In other words, the non-secure process is performed in the region that is not the secure zone, and thus an unauthorized code or the like may be executed by exploiting a vulnerability, i.e., there is a risk of data sniffing or data tampering.

Moreover, communication module 11 outputs, from the UART input and output, data including an instruction, a firmware, or the like for home-appliance main microcontroller 13, or obtains data or the like of home-appliance main microcontroller 13 inputted to the UART input and output.

The UART input and output is used to loosely couple communication module 11 and home-appliance main microcontroller 13 so as to prevent home-appliance main microcontroller 13 from being exposed to a direct attack from Internet 2 or the like. Moreover, the UART input and output converts parallel signals to an asynchronous serial signal and outputs the converted signal to communication path 12, or converts a serial signal inputted from communication path 12 to parallel signals and outputs the converted signals to the non-secure processing unit. It is to be noted that UART is an abbreviation for "Universal Asynchronous Receiver Transmitter". The process of the UART input and output is also classified as the non-secure process.

In the present embodiment, data encrypted using shared key 1111a held in the secure zone passes through the non-secure process and the UART output, and also passes through communication path 12. In other words, communication path 12 is protected by shared key 1111a.

Next, second microcontroller 111 included in communication module 11 is described.

### [Second microcontroller 111]

Second microcontroller 111 is an example of the second microcontroller used to communicate with the outside, and further controls the communication function of communication module 11.

Second microcontroller 111 protects communication path 12 using the held shared key. It is to be noted that second microcontroller 111 may protect communication path 12 using a shared key with the key length of 128 bits or more which uses, for example, AES-GCM in which encryption and prevention of data tampering are simultaneously available. It is to be noted that, in the AES-GCM based prevention of data tampering, after (i) on the transmission side, a message authentication code obtained by applying the shared key to data transmission and reception is calculated and added to data, and (ii) on the reception side, a message authentication code of transmitted and received data is calculated, the data is verified by checking whether the calculated message authentication code matches the added message authentication code.

In the present embodiment, second microcontroller 111 adds a message authentication code to encrypted data to be transmitted and received whose communication content is encrypted using held shared key 1111a, and transmits the encrypted data to home-appliance main microcontroller 13 through communication path 12. Moreover, second microcontroller 111 verifies, using a message authentication code transmitted from home-appliance main microcontroller 13, that transmitted and received data is not tampered, and decrypts the transmitted and received encrypted data using held shared key 1111a.

FIG. 4 is a diagram illustrating an example of the functional configuration of second microcontroller 111 included in communication module 11 according to the embodiment.

As shown in FIG. 4, second microcontroller 111 includes holder 1111, detector 1112, and key sharing unit 1113.

### <Holder 1111>

Holder 1111 is, for example, a memory, and holds shared key 1111a which is one of encryption keys of the common-key cryptosystem. In the present embodiment, holder 1111 holds shared key 1111a in the secure zone. It is to be noted that, as described above, holder 1111 holds the shared key set to all-zero in manufacturing or replacing communication module 11, but this may be also expressed as holding no shared key.

### <Detector 1112>

Detector 1112 verifies, using a message authentication code added to transmitted and received data transmitted from home-appliance main microcontroller 13, that the transmitted and received data is not tampered. Moreover, detector 1112 calculates a message authentication code of the transmitted and received data transmitted from home-appliance main microcontroller 13, using shared key 1111a held by holder 1111, and verifies whether to match a message authentication code added to the transmitted and received data transmitted from home-appliance main microcontroller 13. When a mismatch between the message authentication codes is detected, detector 1112 deletes shared key 1111a held by holder 1111, and requests key sharing unit 1113 to perform a process of sharing a new shared key.

It is to be noted that when a mismatch between the message authentication code calculated using shared key 1111a and the message authentication code added to the transmitted and received data transmitted from home-appliance main microcontroller 13 is detected a predetermined number of times, detector 1112 may delete shared key 1111a held by holder 1111, and request key sharing unit 1113 to perform the process of sharing a new shared key.

Moreover, when it is detected that no shared key is held by holder 1111 (i.e., the shared key is set to all-zero), detector 1112 may request key sharing unit 1113 to perform the process of sharing a new shared key.

### <Key sharing unit 1113>

Under predetermined conditions, key sharing unit 1113 allows a shared key to be shared between communication module 11 and home-appliance main microcontroller 13.

For example, when requested by detector 1112 to perform the process of sharing a new shared key, key sharing unit 1113 obtains the first shared key as new shared key 1111a from home-appliance main microcontroller 13 after initialization such as setting shared key 1111a to all-zero. Key sharing unit 1113 causes holder 1111 to hold new shared key 1111a obtained. In the present embodiment, when requested by detector 1112 to perform the process of sharing a new shared key, key sharing unit 1113 generates a session key and transmits the encrypted session key encrypted using a secret key of a public-key cryptosystem to home-appliance main microcontroller 13 through communication path 12. It is to be noted that key sharing unit 1113 obtains and holds the secret key of the public-key cryptosystem before generating the session key. Subsequently, key sharing unit 1113 decrypts, using the session key, the encrypted first shared key received through communication path 12 to obtain the first shared key as new shared key 1111a.

It is to be noted that, when holder 1111 hold no encryption key of the common-key cryptosystem, key sharing unit 1113 may obtain, from home-appliance main microcontroller 13, the shared key held by home-appliance main microcontroller 13 as new shared key 1111a. More specifically, when no encryption key of the common-key cryptosystem is held by holder 1111, key sharing unit 1113 may generate a session key and transmit the encrypted session key encrypted using a secret key of the public-key cryptosystem to home-appliance main microcontroller 13 through communication path 12. Subsequently, key sharing unit 1113 may decrypt, using the session key, the encrypted first shared key received through communication path 12 to obtain the first shared key as new shared key 1111a.

In this manner, when no shared key is held by holder 1111 (i.e., the shared key is set to all-zero), key sharing unit 1113 obtains new shared key 1111a from home-appliance main microcontroller 13. As described above, when no shared key is held by holder 1111 is, for example, when IoT home appliance 1 is shipped from a factory, or when communication module 11 is in failure and replaced with a new part.

It is to be noted that, in comparison with the common-key cryptosystem, the public-key cryptosystem is high in processing load for home-appliance main microcontroller 13 with limited performance. When such a high-load process is performed every time a home appliance is routinely used, this causes a decrease in responsiveness of the home appliance. However, when the process of the public-key cryptosystem is performed only once in the first operation after shipment from the factory, in walk-in repair or part replacement by a repair worker at the installation area, or the like, it is acceptable for the process to be high-load and time-consuming.

### [Physical device 14]

Physical device 14 is a device part that plays the main function of IoT home appliance 1. In a case where IoT home appliance 1 is a washing machine, the device part is a motor for rotating the drum, a water inlet, a detergent inlet, or the like.

### [Home-appliance main microcontroller 13]

Home-appliance main microcontroller 13 is a microcontroller that is used to control physical device 14, i.e., to control the main function of IoT home appliance 1, and operates on, for example, a real-time OS. More specifically, home-appliance main microcontroller 13 is included inside IoT home appliance 1 as a hardware module different from communication module 11, and is used to control the device.

Moreover, home-appliance main microcontroller 13 holds a shared key which is an encryption key of a common-key cryptosystem for protecting communication path 12. It is to be noted that in the present embodiment, in the first operation after shipment from the factory, walk-in repair or part replacement by a repair worker at the installation area, or the like, home-appliance main microcontroller 13 holds a shared key basically having a different value for each device. For example, after manufacture equipment generates a random value in manufacturing the device, the shared key is set to the random value. Accordingly, this random value can be statistically regarded as a unique value when the bit length of the shared key is sufficiently long. Besides this, in the first operation after manufacturing the device, home-appliance main microcontroller 13 may generate and set a random value by itself.

In data transmission to and reception from communication module 11 through communication path 12, home-appliance main microcontroller 13 transmits and receives data encrypted using the shared key.

Here, as shown in FIG. 3, in home-appliance main microcontroller 13, a microcontroller process is performed.

### <Microcontroller process>

In the microcontroller process, a firmware for use in the control of physical device 14 is used to control physical device 14. The firmware is stored on, for example, a flash memory.

In the present embodiment, home-appliance main microcontroller 13 holds, in a region where the microcontroller process is performed, shared key 1311a which is an encryption key of a common-key cryptosystem for protecting communication path 12. It is to be noted that the microcontroller process and a process by the firmware are performed in a region other than the secure zone, and thus are classified as a non-secure process.

Next, the function of first microcontroller 131 that performs the microcontroller process of home-appliance main microcontroller 13 is described.

### [First microcontroller 131]

First microcontroller 131 is an example of first microcontroller that performs the microcontroller process of home-appliance main microcontroller 13, and is used to control physical device 14.

First microcontroller 131 holds the shared key, and protects communication path 12 using the held shared key. It is to be noted that first microcontroller 131 may protect communication path 12 together with second microcontroller 111 using a shared key with the key length of 128 bits or more which uses, for example, AES-GCM in which encryption and prevention of data tampering are simultaneously available.

In the present embodiment, first microcontroller 131 adds a message authentication code to encrypted data to be transmitted and received whose communication content is encrypted using held shared key 1311a, and transmits the encrypted data to communication module 11 through communication path 12. Moreover, first microcontroller 131 checks a message authentication code transmitted from communication module 11, and then decrypts the transmitted and received encrypted data using held shared key 1311a after checking that shared key 1311a matches shared key 1111a.

FIG. 5 is a diagram illustrating an example of the functional configuration of first microcontroller 131 according to the embodiment.

As shown in FIG. 5, first microcontroller 131 includes holder 1311, and key sharing unit 1313.

### <Holder 1311>

Holder 1311 is, for example, a memory, and holds shared key 1311a which is one of encryption keys of the common-key cryptosystem. In the present embodiment, holder 1311 holds random shared key 1311a different for each device in manufacturing or replacement of home-appliance main microcontroller 13. Accordingly, new shared key 1311a is held in manufacturing home-appliance main microcontroller 13 and in part replacement caused by failure.

### <Key sharing unit 1313>

In response to a request from communication module 11, key sharing unit 1313 transmits, to communication module 11, shared key 1311a which is the first shared key.

For example, key sharing unit 1313 decrypts the encrypted session key received from communication module 11 through communication path 12 using a public key paired with the secret key, to obtain the session key. It is to be noted that key sharing unit 1313 obtains and holds the public key paired with the secret key before generating the session key. Key sharing unit 1313 transmits the encrypted first shared key obtained by encrypting the held first shared key using the obtained session key, to communication module 11 through communication path 12.

### (3) Operation

Next, the operation of IoT home appliance 1 configured as described above is described.

FIG. 6 is a flowchart illustrating the operation process of IoT home appliance 1 according to the embodiment.

First, in shipment of IoT home appliance 1 or part replacement of home-appliance main microcontroller 13, the first shared key which is one of encryption keys of the common-key cryptosystem is held by home-appliance main microcontroller 13 (S10). In the example shown in FIG. 3, home-appliance main microcontroller 13 holds shared key 1311a as the first shared key unique to each IoT home appliance 1.

Next, home-appliance main microcontroller 13 detects a mismatch between the first message authentication code added to the encrypted data obtained from communication module 11 through communication path 12 and the second message authentication code calculated from the encrypted data using shared key 1311a (S11). In this manner, it is possible to detect a mismatch between the shared key held by communication module 11 (shared key 1111a) and the shared key held by home-appliance main microcontroller 13 (shared key 1311a). It is to be noted that such a mismatch occurs in the first operation after shipment from the factory, when communication module 11 is in failure and replaced with a new part, when home-appliance main microcontroller 13 is in failure and replaced with a new part, or the like.

Next, communication module 11 obtains the first shared key from home-appliance main microcontroller 13, thereby sharing the first shared key between home-appliance main microcontroller 13 and communication module 11 (S12). In this manner, communication module 11 is allowed to hold the shared key held by home-appliance main microcontroller 13 (shared key 1311a), and thus it is possible to allow for sharing the shared key of the common-key cryptosystem for protecting the communication path (internal bus) provided in IoT home appliance 1.

Next, an operation that allows communication module 11 to securely hold the shared key held by home-appliance main microcontroller 13 (shared key 1311a) using the public-key cryptosystem and a key exchange system is described as an example of the details of Step S12 shown in FIG. 6.

FIG. 7 is a flowchart illustrating an example of the details of Step S12 shown in FIG. 6.

In Step S12 shown in FIG. 6, firstly, communication module 11 generates a session key, and transmits the encrypted session key obtained by encrypting the session key using the secret key to home-appliance main microcontroller 13 through communication path 12 (S121).

Next, home-appliance main microcontroller 13 obtains the session key by decrypting the encrypted session key received through communication path 12 at Step S121 using the public key paired with the secret key (S122).

Next, home-appliance main microcontroller 13 transmits an encrypted first shared key obtained by encrypting the held first shared key using the session key obtained at Step S122 to communication module 11 through communication path 12 (S123).

Next, communication module 11 obtains the first shared key by decrypting the encrypted first shared key received through communication path 12 using the session key, thereby sharing the first shared key between home-appliance main microcontroller 13 and communication module 11 (S124).

As described above, using the public key and the secret key of the public-key cryptosystem, communication module 11 and home-appliance main microcontroller 13 share the session key generated using the key exchange system such as SSL/TLS. In view of this, communication module 11 obtains the first shared key held by home-appliance main microcontroller 13 by obtaining the first shared key encrypted by home-appliance main microcontroller 13 using the session key and decrypting the encrypted first shared key using the session key. In this manner, communication module 11 and home-appliance main microcontroller 13 can securely share the first shared key held by home-appliance main microcontroller 13.

Next, a sequence of securely sharing the first shared key held by home-appliance main microcontroller 13 between communication module 11 and home-appliance main microcontroller 13 is described.

FIG. 8 is a diagram illustrating an example of an operation sequence until a shared key is securely shared between communication module 11 and home-appliance main microcontroller 13 according to the embodiment. It is to be noted that, in FIG. 8, the first shared key is also referred to as a shared key.

First, in key issue organization 30, Certification Authority (CA) generates key pairs (S101), and transmits the public key of each of the key pairs (CA public key) to home-appliance main microcontroller 13. More specifically, CA generates key pairs each including a public key and a secret key, and transmits the public keys of the key pairs to home-appliance main microcontroller 13.

Next, home-appliance main microcontroller 13 obtains the CA public keys (S102). It is to be noted that, in the case of after shipment, home-appliance main microcontroller 13 obtains, through communication path 12, the CA public keys obtained by communication module 11. In the case of part replacement or manufacturing, home-appliance main microcontroller 13 obtains the CA public keys without involving communication module 11. Moreover, as long as Step S102 is performed after Step S101, Step S102 may be performed at any time before Step S105 described later.

Next, in key issue organization 30, CA generates a key pair for communication module 11 from the secret key of each of the key pairs generated at Step S101 (CA secret keys), and transmits the generated key pair to communication module 11 (S104). More specifically, CA selects a secret key for communication module 11 from among the secret keys of the key pairs each including a public key and a secret key, generated at Step S101, and generates a public key for communication module 11. CA also generates an individual certification of the secret key for communication module 11 that includes the public key, and transmits the secret key for communication module 11 and the individual certification to communication module 11.

Next, after obtaining the individual certification, communication module 11 transmits the individual certification to home-appliance main microcontroller 13 through communication path 12 (S105).

Next, home-appliance main microcontroller 13 obtains the individual certification and authenticates the individual certification (S106). It is to be noted that, as long as Step S106 is performed after Step S105, Step S106 may be performed at any time before Step S109 described later.

Next, after obtaining the secret key (S107), communication module 11 generates a session key (S108).

Next, communication module 11 encrypts the session key generated at Step S108 using the secret key obtained at Step S107 (S109), and transmits the encrypted session key to home-appliance main microcontroller 13 through communication path 12.

Next, after obtaining the encrypted session key from communication module 11, home-appliance main microcontroller 13 decrypts the encrypted session key using the public key included in the individual certification authenticated at Step S106 (S110).

Here, home-appliance main microcontroller 13 holds the shared key generated in finished-product factory 40 (shared key 1311a). It is to be noted that a time when home-appliance main microcontroller 13 holds the shared key is not the time shown in FIG. 8, but in part replacement or shipment of home-appliance main microcontroller 13.

Next, home-appliance main microcontroller 13 encrypts the shared key held by itself using the session key obtained by decrypting at Step S110 (S113). Home-appliance main microcontroller 13 transmits the encrypted shared key to communication module 11 through communication path 12.

Next, communication module 11 decrypts the encrypted shared key obtained at Step S113, using the session key generated at Step S108 (S114).

Next, communication module 11 holds the shared key obtained by decrypting at Step S105 (S115).

In this manner, when the shared key held by communication module 11 included in IoT home appliance 1 does not match the shared key held by home-appliance main microcontroller 13 included in IoT home appliance 1, it is possible to use the public-key cryptosystem and the key exchange system to allow communication module 11 to securely hold the shared key held by home-appliance main microcontroller 13.

It is to be noted that, in manufacturing IoT home appliance 1 or in part replacement of communication module 11, the shared key held by communication module 11 is set to all-zero. In this case, in the initial communication, communication module 11 notifies home-appliance main microcontroller 13 of the individual certification of communication module 11, and requests home-appliance main microcontroller 13 to send the shared key. It is sufficient that home-appliance main microcontroller 13 verifies the signature of the individual certification, encrypts the shared key using the session key, and transmits the encrypted shared key to communication module 11. After this, communication module 11 obtains the shared key by decrypting the encrypted shared key

### (4) Advantageous effects, etc.

As described above, according to the present embodiment, when the shared key held by communication module 11 included in IoT home appliance 1 does not match the shared key held by home-appliance main microcontroller 13 included in IoT home appliance 1, communication module 11 is allowed to securely hold the shared key held by home-appliance main microcontroller 13. Accordingly, it is possible to allow for sharing the shared key of the common-key cryptosystem for protecting the communication path (internal bus) in IoT home appliance 1.

Moreover, when the shared key held by communication module 11 included in IoT home appliance 1 does not match the shared key held by home-appliance main microcontroller 13 included in IoT home appliance 1, the public-key cryptosystem and the key exchange system may be used to allow communication module 11 to hold the shared key held by home-appliance main microcontroller 13. As described above, the public-key cryptosystem which takes a processing time of several seconds to several tens of seconds (i.e., heavy processing) is used only when the shared key is shared. Accordingly, even when home-appliance main microcontroller 13 is limited in processing performance, the use of the home appliance is possible without a practical inconvenience. In this manner, it is possible to allow for securely sharing the shared key for protecting the communication path (internal bus) in IoT home appliance 1.

As described above, in the information processing method and the device according to the present embodiment, the common-key cryptosystem which is light processing is used in normal use to protect communication path 12, while the public-key cryptosystem which is heavy processing is used only when the shared key is shared. When the shared key of communication module 11 is kept all-zero (an initial value) or when a mismatch between the shared key of communication module 11 and the shared key of home-appliance main microcontroller 13 is detected, communication module 11 and home-appliance main microcontroller 13 perform the operation for sharing the shared key.

In this manner, even when the microcontroller is an inexpensive home-appliance microcontroller limited in processing performance and including only a hardware AES engine as the security system, it is possible to ensure the security and eliminate the need for special tools and reconfiguration of internal-bus code by a technical person even in part replacement for repair.

### [Industrial Applicability]

The present disclosure is applicable to an information processing method, a device, and a program for an IoT home appliance or the like including an inexpensive home-appliance microcontroller limited in processing performance.

### [Reference Signs List]

1 IoT home appliance
2 Internet
3 cloud system
11 communication module
12 communication path
13 home-appliance main microcontroller
14 physical device
30 key issue organization
40 finished-product factory
111 second microcontroller
1111a, 1311a shared key
131 first microcontroller
1111, 1311 holder
1112, 1312 detector
1113, 1313 key sharing unit

## Claims

1. An information processing method that is for a device and allows for sharing a shared key between a first microcontroller used to control the device and a second microcontroller used to communicate with outside which are each included in the device as different hardware modules, the shared key being an encryption key of a common-key cryptosystem for protecting a communication path between the first microcontroller and the second microcontroller, the information processing method comprising:
holding, by the first microcontroller, a first shared key that is one of encryption keys of the common-key cryptosystem;
detecting, by the second microcontroller, a mismatch between a first message authentication code added to encrypted data obtained from the first microcontroller through the communication path and a second message authentication code calculated from the encrypted data; and
when the mismatch is detected by the second microcontroller in the detecting, sharing the first shared key between the first microcontroller and the second microcontroller by the second microcontroller obtaining the first shared key from the first microcontroller.

2. The information processing method according to claim 1, wherein
the sharing includes:
when the mismatch is detected by the second microcontroller in the detecting, generating, by the second microcontroller, a session key, and transmitting, by the second microcontroller, an encrypted session key obtained by encrypting the session key using a secret key of a public-key cryptosystem to the first microcontroller through the communication path;
obtaining, by the first microcontroller, the session key by decrypting the encrypted session key received through the communication path using a public key paired with the secret key;
transmitting, by the first microcontroller, an encrypted first shared key obtained by encrypting the held first shared key using the obtained session key to the second microcontroller through the communication path; and
obtaining, by the second microcontroller, the first shared key by decrypting the encrypted first shared key received through the communication path using the session key, to share the first shared key between the first microcontroller and the second microcontroller.

3. The information processing method according to claim 1 or 2, wherein
the sharing includes:
when the mismatch is detected a predetermined number of times by the second microcontroller in the detecting, obtaining, by the second microcontroller, the first shared key from the first microcontroller.

4. The information processing method according to claim 1 or 2, wherein
the sharing further includes:
when no encryption key of the common-key cryptosystem is held by the second microcontroller, obtaining, by the second microcontroller, the first shared key from the first microcontroller to share the first shared key between the first microcontroller and the second microcontroller.

5. The information processing method according to claim 4, wherein
the sharing includes:
when no encryption key of the common-key cryptosystem is held by the second microcontroller, generating, by the second microcontroller, a session key, and transmitting, by the second microcontroller, an encrypted session key obtained by encrypting the session key using a secret key of a public-key cryptosystem to the first microcontroller through the communication path;
obtaining, by the first microcontroller, the session key by decrypting the encrypted session key received through the communication path using a public key paired with the secret key;
transmitting, by the first microcontroller, an encrypted first shared key obtained by encrypting the held first shared key using the obtained session key to the second microcontroller through the communication path; and
obtaining, by the second microcontroller, the first shared key by decrypting the encrypted first shared key received through the communication path using the session key, to share the first shared key between the first microcontroller and the second microcontroller.

6. The information processing method according to claim 1 or 2, wherein
the holding is performed in manufacturing the first microcontroller.

7. A device comprising:
a first microcontroller included in the device and used to control the device;
a second microcontroller included in the device as a hardware module different from the first microcontroller and used to communicate with outside; and
a communication path between the first microcontroller and the second microcontroller, wherein
the first microcontroller includes:
a holder that holds a first shared key which is one of encryption keys of a common-key cryptosystem for protecting the communication path, and
the second microcontroller includes:
a detector that detects a mismatch between a first message authentication code added to encrypted data obtained from the first microcontroller through the communication path and a second message authentication code calculated from the encrypted data; and
a key sharing unit that allows the first shared key to be shared between the first microcontroller and the second microcontroller by obtaining the first shared key from the first microcontroller when the mismatch is detected by the second microcontroller.

8. A program that causes a computer to execute an information processing method that is for a device and allows for sharing an encryption key between a first microcontroller used to control the device and a second microcontroller used to communicate with outside which are each included in the device as different hardware modules, the encryption key being of a common-key cryptosystem for protecting a communication path between the first microcontroller and the second microcontroller, the information processing method comprising:
holding, by the first microcontroller, a first shared key that is one of encryption keys of the common-key cryptosystem;
detecting, by the second microcontroller, a mismatch between a first message authentication code added to encrypted data obtained from the first microcontroller through the communication path and a second message authentication code calculated from the encrypted data; and
when the mismatch is detected by the second microcontroller in the detecting, sharing the first shared key between the first microcontroller and the second microcontroller by the second microcontroller obtaining the first shared key from the first microcontroller.
